# EUROPEAN PATENT APPLICATION

(11) **EP 3 603 433 A1**
(43) Date of publication of application: **05.02.2020**
(21) Application number: 18774318.2
(22) Date of filing: 28.03.2018
(51) Int. Cl.: A42B 1/00, A42B 1/06

(54) **ACCESSORY FOR PORTABLE ELECTRONIC DEVICE**

(30) Priority: 31.03.2017 ES 201730394 U
(71) Applicant: Perez Alonso, Roberto, 08917 Badalona (ES); Prieto Blasco, Berta, 08917 Badalona (ES)
(72) Inventor: PEREZ ALONSO, Roberto, 08917 Badalona (ES)
(74) Representative: Espiell Gomez, Ignacio
(86) International application number: PCT/ES2018/070278
(87) International publication number: WO 2018/178489

(57) **Abstract**

The invention relates to an accessory for a portable electronic device, comprising a cover (1) having a size and shape suitable for covering both a portable electronic device (2) and at least the face (3) of the user of said portable electronic device (2), said cover (1) having openings (4) arranged on the side in relation to the user and used to pass the user's arms and hands through, and being provided with means for attaching to the head of the user. Optionally, the cover (1) is made entirely or partially out of a flexible fabric, is entirely or partially opaque, is entirely or partially breathable, and is made from an impermeable and preferably transparent material. It contains means for attaching the portable electronic device (2) on the inside, is made from a single part, and consists of an upper portion (11) and another lower portion (12) that are different from each other.

## Description

### OBJECT OF THE INVENTION

This application for an invention has as object the registration of an accessory for portable electronic device, that incorporates significant innovations and advantages compared with the techniques used until now.

More concretely, the invention proposes the development of an accessory for portable electronic device , that because of its particular arrangement, allows that an user uses a portable electronic device, such as for example a mobile phone, tablet, smartphone, laptop, or similar, with a suitable privacy and comfort, preventing light pollution in its surrounding and contributing with suitable breathability conditions to the user.

### BACKGROUND OF THE INVENTION

In the current state-of-the-art, within the sector of mobile and audiovisual technology, applications designed to the improvement in the use of the portable electronic devices are known.

However, the said portable electronic devices often require a suitable personal privacy and comfort, as well as preventing light pollution in their use, in as well public as private spheres, such as the public transport or at home, for example.

The users of electronic devices many times encounter difficulties for using them, above all in their use at home and in the transport.

This invention contributes to solve and overcome these problems, because due to its particular arrangement, it allows to an user the use of portable electronic device, such as for example a mobile phone, tablet, smartphone, laptop, or similar, with a suitable privacy and comfort, preventing light pollution in their surrounding and contributing with suitable breathability conditions to the user.

### DESCRIPTION OF THE INVENTION

This invention was developed in order to provide an accessory for portable electronic device, essentially characterized in that it includes a sheath possessing a geometry and proportions enabled to simultaneously cover a portable electronic device and at least the face of the user of the said portable electronic device, the said sheath being provided with openings in lateral arrangement with relation the user himself and enabled for the passage of the arms and hands of the said user, and provided with fastening means on the head of the user himself.

Preferably, in the accessory for portable electronic device, the sheath is fully or partly made of flexible fabric.

Preferably, in the accessory for portable electronic device the sheath is fully or partly opaque.

Preferably, in the accessory for portable electronic device, the sheath is fully or partly breathable.

Alternatively, in the accessory for portable electronic device, the sheath incorporates in its inner part, means for attachment the portable electronic device.

In addition, in the accessory for portable electronic device, the attachment means comprise Velcro strips.

Alternatively, in the accessory for portable electronic device, the fastening means comprise elastic bands adjustable in the head of the user.

Alternatively, in el accessory for portable electronic device, the sheath is made in only one piece.

Alternatively, in the accessory for portable electronic device, the sheath is composed of an upper portion and another lower portion, differentiated.

Preferably, in the accessory for portable electronic device, the upper portion possesses opacity properties and the lower portion possesses breathability properties.

In addition, in the accessory for portable electronic device, the upper portion and the lower portion possess means for joining them to each other.

Alternatively, in the accessory for portable electronic device, the joining means comprise clippings.

Thanks to this invention, a use of a portable electronic device is achieved, such as for example a mobile phone, tablet, smartphone, laptop or similar, with a suitable privacy and comfort, preventing light pollution in its surrounding and contributing with suitable breathability conditions to the user.

In an alternative embodiment, the accessory for portable electronic device is made of an impermeable and preferably transparent material. This embodiment is especially useful for the use of the electronic device in bad weather conditions, either rain, wind or blizzard.

Other characteristics and advantages of the accessory for portable electronic device will be apparent from the description of a preferred but not exclusive embodiment, that is illustrated for not limiting example purpose in the drawing attached hereto in which:

### SHORT DESCRIPTION OF THE DRAWINGS

Figure 1.- It is a schematic view and in its use of a modality of preferred embodiment of the accessory for portable electronic device of this invention.
Figure 2.- It is a schematic view and exploded of a modality of preferred embodiment of accessory for portable electronic device of this invention.

### DESCRIPTION OF A PREFERRED EMBODIMENT

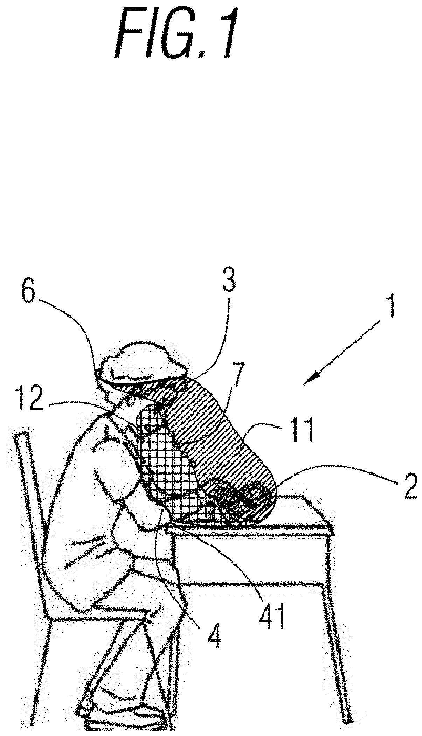

As schematically shown in the figure 1, the accessory for portable electronic device comprises a sheath 1.
In this modality of preferred embodiment, the sheath 1 is fully or partly made of flexible fabric.

As it can be seen in the figure 1, the said sheath 1 in addition possesses a geometry and proportions enabled to simultaneously cover a portable electronic device 2 and at least the face 3 of the user of the said portable electronic device 2, and simultaneously when the user is making use of it.

The said portable electronic device 2 can be a mobile phone, tablet, smartphone, laptop or similar.

According to different modalities of preferred embodiment of the accessory for portable electronic device of the invention, the sheath 1 can be made in only one piece.

In other modalities of embodiment, as schematically represented in the figure 1, the sheath 1 is composed of an upper portion 11 and another lower portion 12 with relation with the user himself and differentiated. In the figure 1, the upper portion 11 and the lower portion 12 appear shaded with different lines to best perceive their differentiation. In addition, also appear visible the portable electronic device 2 and the face 3, arms and hands of the user himself, in spite of being covered by the sheath 1, to also contribute to best perceive the arrangement of the invention.

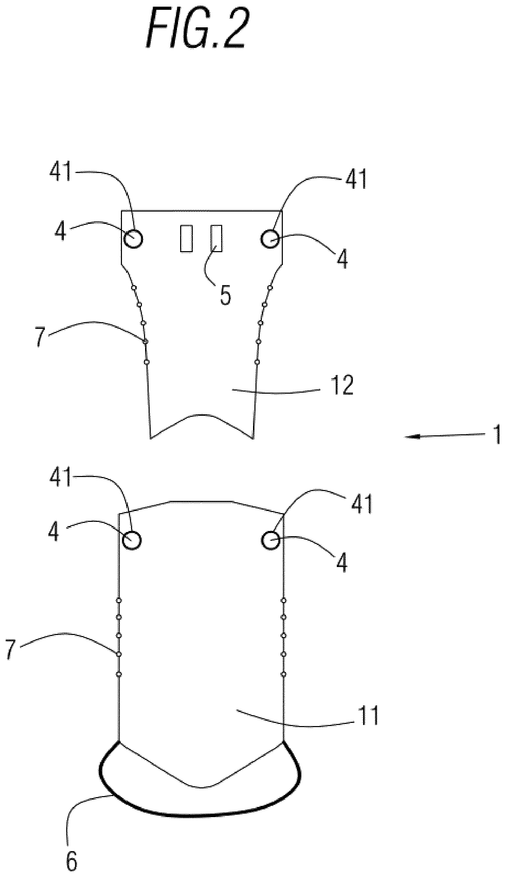

In the figure 2 the same sheath 1 of the figure 1 appears, but exploded in its upper portion 11 and in its lower portion 12.

The sheath 1 is provided with openings 4 in lateral arrangement with relation to the user himself. The said openings 4 are enabled for the passage of the hands of the said user, and therefore the user can manually handle the portable electronic device 2 covered by the sheath 1.

The above-mentioned openings 4 of the sheath 1 and shown in the figure 1, appear shown in their arrangement in the upper portion 11 and in the lower portion 12 in the figure 2. The said openings 4 can also incorporate elastic rings 41 in order to this way adjusting the passage of the arms and hands of the user.

The sheath 1 incorporates in its inner part attachment means of the portable electronic device 2, in order thus to facilitate the manual use thereof by the user. The attachment means can comprise Velcro strips 5, for example, arranged at the lower portion 12 of the sheath 1.

In addition, the sheath 1 incorporate means for fastening the head of the user himself. In this modality of preferred embodiment, the fastening means comprise elastic bands 6 enabled to be fastened and surround the head of the user, and thus fasten the sheath 1 with relation to the user himself, and arranged at the upper portion 11 of the sheath 1.

The upper portion 11 and the lower portion 12 possess mutually joining means to each other, for example clipping-like 7.

The sheath 1 possesses opacity properties, in order to provide thus privacy in the use of the portable electronic device 2 and preventing light pollution in the surrounding in its use. At same time, the sheath 1 possess breathability properties, to thus provide the al user with suitable environmental conditions in its use.

According to the above, the upper portion 11 of the sheath 1 possesses opacity properties and the lower portion 12 possesses breathability properties.

The accessory for portable electronic device of the invention, makes the user secure suitably covering him, generating a relaxed and warm environment, protecting his privacy and removing possible light nuisances generated by the said portable electronic devices.

Its arrangement allows its suitable adaptation to different sizes of the body of the user and of the portable electronic devices, and it can be for example impermeable, and adapt itself to different external elements, such as for example backpacks, oilskins, sleeping bags, etc.

In the event that the accessory for portable electronic device of the invention is made of an impermeable and preferably transparent material, this later result very useful when the user wishes to use the electronic device under bad weather conditions, either rain, wind or blizzard.

The details, shapes, sizes and the rest of the accessory elements, as well as the materials used in producing the accessory for portable electronic device of the invention, can be conveniently replaced by others that are technically equivalent and do not depart from the essence of the invention or the scope defined by the claims included thereafter.

## Claims

1. Accessory for portable electronic device, **characterized in that** it comprises a sheath (1) that possesses a geometry and proportions enabled to simultaneously cover a portable electronic device (2) and at least the face (3) of the user of the said portable electronic device (2), the said sheath (1) being provided with openings (4) in lateral arrangement with relation to the said user and enabled for the passage of the arms and hands of the said user, and provided with fastening means in the head of the said user.

2. Accessory for portable electronic device according to claim 1, **characterized in that** the sheath (1) is fully or partly made of flexible fabric.

3. Accessory for portable electronic device according to claim 1, **characterized in that** the sheath (1) is fully or partly opaque.

4. Accessory for portable electronic device according to claim 1, **characterized in that** the sheath (1) is fully or partly breathable.

5. Accessory for portable electronic device according to claim 1, **characterized in that** the sheath (1) incorporate in its inner part fastening means of the portable electronic device (2).

6. Accessory for portable electronic device according to claim 5, **characterized in that** the fastening means comprise Velcro strips (5).

7. Accessory for portable electronic device according to claim 1, **characterized in that** the fastening means comprise elastic bands (6) adjustable in the head of the user.

8. Accessory for portable electronic device according to claim 1, **characterized in that** the sheath (1) is made only in one piece.

9. Accessory for portable electronic device according to claim 1, **characterized in that** the sheath (1) is composed of an upper portion (11) and another lower portion (12), differentiated.

10. Accessory for portable electronic device according to claim 9, **characterized in that** the upper portion (11) possesses opacity properties and the lower portion (12) possesses breathability properties.

11. Accessory for portable electronic device according to claim 9, **characterized in that** the upper portion (11) and the lower portion (12) possesses means for joining them to each other.

12. Accessory for portable electronic device according to claim 11, **characterized in that** the joining means comprise clippings (7).

13. Accessory for portable electronic device according any of the preceding claims, **characterized in that** it is made of an impermeable and preferably transparent material.
